(19) Europäisches Patentamt

European Patent Office

Office européen des brevets

(11) EP 0 339 947 B1

## (12) EUROPEAN PATENT SPECIFICATION

(45) Date of publication and mention
of the grant of the patent:
**04.09.1996   Bulletin 1996/36**

(51) Int Cl.⁶: **H04N 11/04**

(21) Application number: **89304128.5**

(22) Date of filing: **26.04.1989**

(54) **Method and system for decompressing colour video encoded data**

Verfahren und System zur Dekompression von kodierten Farbvideodaten

Méthode et système de décompression de données vidéo couleur codées

(84) Designated Contracting States:
**AT BE CH DE ES FR GB GR IT LI LU NL SE**

(30) Priority: **27.04.1988  US 186574**
**27.04.1988  US 186575**

(43) Date of publication of application:
**02.11.1989   Bulletin 1989/44**

(73) Proprietor: **BIL (Far East Holdings) Limited (a Hong Kong corporation)**
**La Jolla, California 92037-4241 (US)**

(72) Inventors:
• **Music, John**
**Irvine California 92714 (US)**
• **Thomas, James L.**
**Placentia California 92670 (US)**
• **Smith, Gordon H.**
**Santa Ana California 92714 (US)**

(74) Representative:
**Cross, Rupert Edward Blount et al**
**BOULT, WADE & TENNANT**
**27 Furnival Street**
**London EC4A 1PQ (GB)**

(56) References cited:
EP-A- 0 107 072          EP-A- 0 261 561
DE-A- 2 304 344          FR-A- 2 524 740
US-A- 4 546 383

**Description**

BACKGROUND OF THE INVENTION

Field of the Invention:

This invention relates generally to information signal processing, and in particular to a method and system of decompressing color video data in video information communication system. A more particular use of the invention relates to a method and system for decompressing color video data in a video telecommunications system in which data is sent and received over telephone lines.

Prior Art:

Encoding of digital television signals ordinarily requires a transmission rate of approximately 200 Mbits/s. Recent developments in coding systems have permitted the transmission rate to be cut to less than 2 Mbits/s. Coding systems using block oriented analysis of video picture frames and processing by a conventional hybrid discrete cosine transform (DCT) coefficient permit transmission at rates of between 64 Kbits/s and 384 Kbits/s. Such a system is described in Gerken and Schiller, "A Low Bit-Rate Image Sequence Coder Combining A Progressive DPCM On Interleaved Rasters With A Hybrid DCT Technique", IEEE Journal on Selected Areas in Communications, Vol. SAC-5, No. 7, August, 1987. Adaptive coding techniques applied to such DCT processing have allowed video data transmission at rates as low as one to two bits per pixel, as is described in Chen and Smith, "Adaptive Coding of Monochrome and Color Images", IEEE Transactions on Communications, Vol. COM-25, No. 11, November 19, 1977. However, information transmitted at such low data rates seriously affects the ability to reconstruct a sufficient number of frames per second so that a real time picture is acceptable to a viewer. High capacity telephone lines are available which will carry transmissions at a rate of up to 1.544 Mbits/s but such lines are extremely expensive at a dedicated use rate, and are still quite expensive at a scheduled use rate. Lower capacity telephone lines are available which permit transmission at rates of up to 56 Kbits/s and 64 Kbits/s. Relatively expensive video digital and coding devices are commercially available which will transmit a video signal at 56,000 bits per second, so that it is necessary to utilize a combination of a device of this nature with the high capacity 1.544 Mbits/s telephone line to allow a framing speed much faster than about one frame per second. The current transmission rate limit of ordinary telephone lines approaches 18,000 bits per second, so that transmission of real time sequencing of video pictures over ordinary telephone lines has been viewed in the prior art as not being feasible.

Various schemes for reducing the amount of redundancy of information to be transmitted in a digital video signal have been used. One technique is to utilize a slow scan camera; and another technique is to transmit every nth scanning line for each frame. Another technique involves the sending of only those parts of a picture frame which are deemed to be important or to have changed in some significant manner, by dividing the picture frame into a number of segments or blocks which are typically 3X3 or 4X4 groups of pixels, and analyzing the content of the blocks. These techniques tend to also reduce the resolution of the video picture.

Another technique in the reduction of transmission time which does not decrease the revolution of a picture transmitted is run length encoding. In run length encoding, the scan lines of a picture frame are encoded as a value of the color content of a series of pixels and the length of the sequence of pixels having that value or range of values. The values may be a measure of the amplitude of a video signal, or other properties of such video signals, such as luminance or chrominance. An example of a system which utilizes run length coding of amplitude of video signals is U.S. Patent US-A-3,609,244 (Mounts). In that system, a frame memory also determines frame to frame differences, so that only those differences from one frame to the next are to be transmitted. Another example of a method for transmitting video signals as compressed run length values which also utilizes statistical coding of frequency values to reduce the number of bits required to represent data is U.S. Patent US-A-4,420,771 (Pirsch).

Ideally, compression of color video information to allow real time sequencing of picture frames at a rate of up to 15 frames per second, and at bit rates as low as 11,500 bits per second, would be desirable to allow the communication of color video data over ordinary telephone lines. A video data compression system able to achieve equivalent data transmission rates as systems using higher quality telephone lines with more efficient and less costly equipment than is currently available would also be desirable.

A video decompression technique is disclosed in FR-A-2524740 which decompresses video data which has been coded by segments in two dimensions to form blocks and thus decompressing takes place for a block with respect to a block of a preceding line. Further, where color video data is compressed, the three color components, the luminance value Y, and the two chrominance values B-Y and R-Y are coded separately. There is no combined color data for a segment nor is there any disclosure of compressing the color components for segments.

In accordance with one aspect the present invention provides a method of decompressing color video data comprising a plurality of digitized signals, each said digitized signal comprising a run length portion representing a run length which is a number of sequential pixels along one of a plurality of scan lines of a video picture frame, said run length being defined to have the same three compressed digital color component signals for each pixel of said run length, and a color portion representing said three digital color component signals in a compressed form for said run length, each of said digitized signals being of a first digital word size, said run length portion of each of said digitized signals being of a second digital word size, and said color portion of each of said digitized signals being of a third digital word size; the method comprising the steps of:

a) a first decompressing step of decompressing said color portion of each of said digitized signals into three digital color component signals of fourth, fifth and sixth digital word sizes, respectively, the sum of said fourth, fifth and sixth digital word sizes being greater than said third digital word size;

b) storing each said run length portion and associated said digital color component signals decompressed by said first decompressing step as an array in a memory means representing said pixels in said plurality of scan lines in said video picture frame; and

c) a second decompressing step comprising generating a color video display signal for each said pixel from said run length portions and said associated digital color component signals decompressed by said first decompressing step.

In accordance with another aspect the present invention provides a system for decompressing color video data comprising a plurality of digitized signals, each said digitized signal comprising a run length portion representing a run length which is a number of sequential pixels along one of a plurality of scan lines of a video picture frame, said run length being defined to have the same three digital color component signals for each pixel of said run length, and a color portion representing said three digital color component signals in a compressed form for said run length, each of said digitized signals being of a first digital word size, said run length portion of each of said digitized signals being of a second digital word size, and said color portion of each of said digitized signals being of a third digital word size; the system comprising:

a) means for performing a first decompressing step of decompressing said color portion of each of said digitized signals into three digital color component signals of fourth, fifth, and sixth digital word sizes, respectively, the sum of said fourth, fifth and sixth digital word sizes being greater than said third digital word size;

b) means for storing each said run length portion and associated said digital color component signals decompressed by said first decompressing step as an array in memory means representing said pixels in said plurality of scan lines in said video picture frame; and

c) means for performing a second decompression step comprising generating a color video display signal for each said pixel from said run length portion and said associated digital color component signals decompressed by said first decompressing step.

One embodiment of the invention further comprises a monitor for use in a video information communication system, including the system for decompressing color video data.

In one currently preferred embodiment of the invention, the system and the method of the invention provide for the storing of the run length portions of the three color components for the scan lines of the picture frame in a display buffer memory means which represents the digital color components for each pixel of the picture frame. The pixels represented in the run length and color components are drawn by a drawing engine from a starting pixel for the run length to the end pixel of the run length, to the end of the portion at each scan line in the picture frame to be mapped. In a preferred embodiment the color portion of the digitized signal is converted into three digital color components each having a word size of six bits.

In a most preferred embodiment the run length and associated color portions are alternately stored in a first buffer memory until a picture frame in that buffer memory is complete; then that frame is converted to standard NTSC format and displayed, while the system is sequentially storing the run length and associated color components of a next picture frame in a second buffer memory, until the picture frame in the second buffer memory is complete; at which time the display switches to the information in the second buffer. The mapping to the first and second buffer memories is repeated for subsequent picture frames. In the case in which the run length portion of the digitized signal has been concatenated, the method and system of the invention also involve the division of the concatentated run lengths and color component combinations into smaller, unconcatenated run length and digital color component combinations, before mapping of the run length and color component information occurs. The display system further converts the discrete color information for each frame to transitioning colors that change in a uniform or shaped rate from one discrete color to the next. This process eliminates the color contouring which would occur if only the discrete colors as received were used.

Other aspects and advantages of the invention will become apparent from the following detailed description, and the accompanying drawings, illustrating by way of example the features of the invention.

BRIEF DESCRIPTION OF THE DRAWINGS

FIGURE 1 is a schematic diagram of the system and method for compressing color video data in a video communication system;

FIG. 2 is a luminance plot across one scan line in a video picture;

FIG. 3 shows a run length representation of features in a video scan line;

FIG. 4 shows is a run length representation of transitions about slope decision points of a video scan line;

FIG. 5 shows a representation of the reconstructed video scan line for display;

FIG. 6 shows a representation of how the run length data is converted to display data with transitions between runs; and

FIG. 7 is a schematic diagram of the method and system for decompressing color video data in accordance with one embodiment of the present invention.

DETAILED DESCRIPTION OF THE INVENTION

As is illustrated in the drawings, in a preferred embodiment of the invention, the video communication system is capable of producing a color video picture using an RGB video camera, generating an analog RGB signal at the normal 60 fields per second, with each field representing half of the picture in an interlaced mode. The signal for the video picture frames generated by the camera 10 is received by an analog to digital converter 12, which converts the green and blue (RGB) analog components into digital RGB components, which are each digitized as six bit digital words, forming packets of bits for the RGB components for each pixel of the color video picture of eighteen bits.

The type of the device used to generate the source color video picture is not crucial,

A camera generating a standard NTSC composite signal which is converted to an RGB digital output would also be suitable as would a field rate differing from 60 fields/sec. The output of the camera also does not need to be strictly RGB, since other three color component groups may be used to create and transmit color video pictures. For example, the three digital color component signals may be cyan, magenta, and yellow; hue, saturation, and intensity or even two distinct colors and a third parameter based upon the entire video signal, such as hue, saturation or intensity of an original analog video signal, so that there would be some automatic weighting of the color information generated by the camera.

It is also not essential that the three color components be represented by the same number of bits, since it is known in the television industry that certain ranges of colors are not as easily perceived by the human eye. Such a weighting of information could involve a reduction in the number of bits used for the red component in an RGB scheme, for example, thus permitting transmission of more gradations of other color information that is actually perceptible.

In addition, the source of the color video pictures to be compressed may be a storage means, such as a video disk, a computer file storage media, a video tape, or the like from which the color video information can be processed for introduction into the color video data compression system of the invention.

The digitized RGB signal is received by the transition engine portion 14 of the input capture engine 16, which preferably includes integrated circuit means and associated memory means. The first major part of the input capture engine is the transition engine which includes circuitry for determining a luminance function based upon the three color component video signal for each picture element, or pixel, of each scan line in the sequence of video picture frames generated by the analog front end of the system. In the preferred mode, the luminance converter 18 sums the bits from each of the three digital color components for each pixel in the scan lines of the video picture frame to get a luminance (or intensity) value and performs further processing of the data obtained. In the system of the present invention each scan line preferably contains 480 pixels, which matches the resolution of the camera and which provides for better resolution than is typically available in the prior art, in which generally only 256 pixels are utilized per scan line. The luminance of the three color components may be weighted to give greater significance to one color or two colors to provide the luminance function, and may also be based in part upon an original source analog video signal. However, the luminance function is preferably based in part at least upon the sum of the three digital color components. The luminance function derived from the sum of the three six bits color components therefore has a digital word size of eight bits. This luminance function for each pixel is utilized in the input capture engine for evaluating one or more decision parameters based upon the luminance function for determination of those pixels which operate as decision points about which the one or more of the decision parameters are found to vary from a prestored set of threshold values.

The luminance function is an excellent indicator of color changes in the picture, or movements of objects in the picture. In the input capture engine the one or more decision parameters based upon the luminance function may also be used as the basis for determination of differences from line to line, and of distinctive sequences of pixels which define edges of objects which can be determined to be moving from frame to frame. Generally, the luminance, or other combination of color components which comprise the luminance function, undergoes significant changes where there are changes in the characteristics of the picture.

The camera also introduces anomalies or artifacts into the video picture due to noise in the color sampling resolution which ideally should be eliminated to reduce the amount of data to be transmitted since they contribute nothing beneficial to the picture. When the picture is displayed with a new field every 60th of a second, the effect of such anomalies is averaged out by the human eye. Areas having a smooth appearance and little actual detail upon close observation seem to "crawl". This appearance is also known as the "mosquito effect". When a picture is frozen so that only one field or picture frame is being examined, the picture takes on a grainy, speckled appearance. The impact of the noise on the luminance data is in the form of tiny variations in the computed luminance. When the picture is digitized, the digitizing process also converts all of these artifacts to digital representations, even though they do not actually represent picture detail. The processing of luminance in the input capture engine operates to eliminate such meaningless details.

One preferred method eliminating the non-essential details caused by noise in the luminance data is to determine the points of change based at least in part on the luminance function for pixels in the scan lines by comparing differences in one or more decision parameters with corresponding adaptive thresholds. This is termed feature encoding. The decision parameters are preferably comprised of differences of the luminance function between pixels, determined between proximate pixels (Diff-1) in a scan line, n plus one n plus two, or even a further distance away, where n represents the position on a scan line of the pixel being examined for changes in luminance; between adjacent first differences (Diff-2), and a cumulative parameter (Cum-diff) which is a sum of the individual difference functions Diff-1, Diff-2, and so on. Each decision parameter has its own corresponding adaptive threshold, having a default value which is subject to modification by this system in response to operator settings. The adaptive threshold preferably has a default value which may be adjusted by the input capture engine responsive to operator or processor selections for resolution. The selecting of the threshold parameters for determining either the feature or transition decision points is quite subjective. The selection of the parameters determines the number of data points required to define the picture and it also determines the overall perceptual quality of the picture.

Typically for the feature run length determination, two thresholds are used. One is the cumulative change in luminance since the last decision point, Cumdiff. Cumdiff will trigger a decision point if it was greater than 6 and the number of pixels since the last decision point was greater than 5. Another decision parameter is the sum of two adjacent difference values, Diff2 (this is the same as the difference between luminance values that are two pixels apart). If the Diff2 value is computed to be greater than typically 32, the logic will signify that the line is entering an edge, which identifies a decision point, and will stay in the edge characteristic until the Diff2 value falls below 20. When the edge mode is exited, the color of the next pixel is carried all the way back to the pixel where the starting edge determination was made. Also, if Diff2 changes sign, it signifies a new decision point. Changing the values for the cumdiff thresholds greatly affects the quality and data complexity of the picture.

In the slope determination of decision points (apexes), three general conditions are used. An initial slope is determined at the decision point and all measurements are base on that slope. The initial slope, INITS, is determined by computing the following function termed NDIFF2:

$$NDIFF2 = (luminance_{(i+2)} - luminance_{(i)})/2$$

INITS is the value of NDIFF2 immediately after the decision point.

CUMDIFF in the slope case is defined the following way:

$$CUMDIFF_{(i)} = CUMDIFF_{(i-1)} + NDIFF2_{(i)}$$

If the absolute value of the CUMDIFF is typically greater than 20 and the number of pixels in the run length is typically greater than 10, then a decision point will be triggered. Similarly, if the absolute value of NDIFF2 is less than or equal to typically 4 and the run length is typically greater than 5, a decision point will be triggered unless the last decision point was also triggered in this manner. The third decision parameter is also based upon NDIFF2:

$$TRIGVAL_{(i)} = NDIFF2_{(i)} - INITS$$

The threshold for TRIGVAL is usually set in the range of 4 to 10 and will trigger a decision point any time the absolute value reaches or exceeds the set value and the run length is at least 2 pixels. Other techniques may be used but these seem to give good quality pictures with an acceptable number of data points.

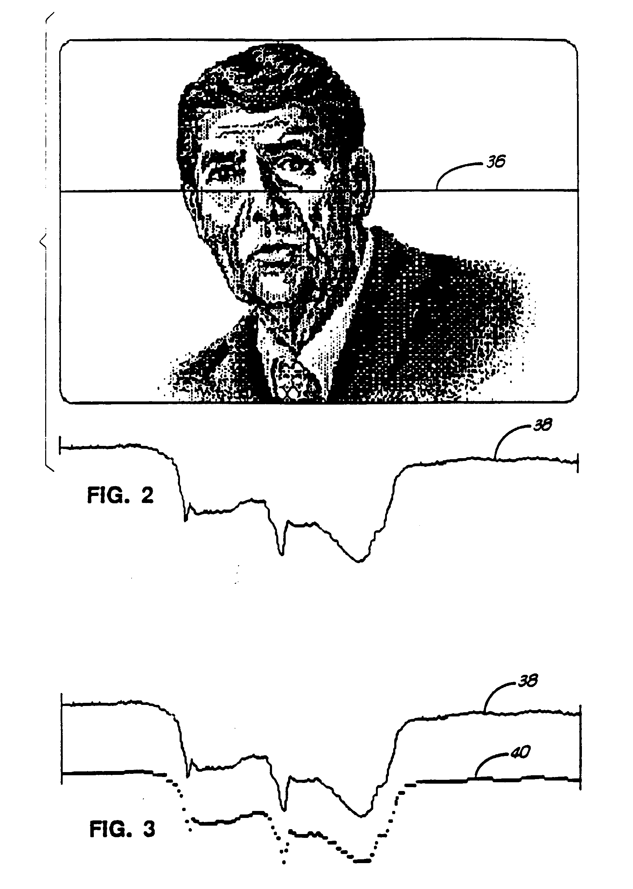

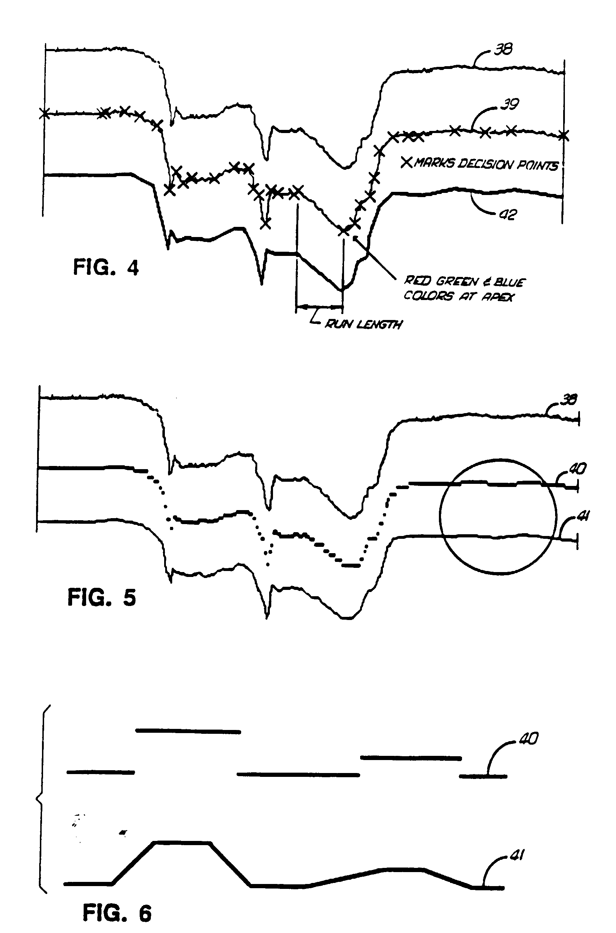

A graphic representation of a typical plot of luminance across a line of a video picture is shown in Figure 2. The luminance function of the pixels intersected by the scan line 36 is graphically represented by line 38. As is shown in Figure 3, a graph of the decision points based upon comparison one of the decision parameters with the corresponding adaptive difference threshold in a feature encoding technique, primarily using Diff-1 and Cum-diff, results in stepped line 40, a sequence of horizontal straight lines across the luminance pattern. Each horizontal line represents a separate length of a specific color.

A second approach which may be used to eliminate the non-essential details is a transition or slope encoding technique, which is illustrated in Figure 4. In this technique the rate of change of the differences in the decision parameter between pixels is determined, and the rates of change of these differences are compared with an adaptive, prestored difference rate of change threshold to determine decision points or apex points These change points or decision points are indicated as X's on lines 39. They indicate the location of the next apex. "Run length" is defined as being the pixel distance between decision points, for both the feature encoding and slope encoding techniques. According to the transition or slope encoding technique, the luminance data results in a line 42 representing a series of apexes or slope decision points, which may be used for controlling the color segments between decision points. A drawing engine can produce a smooth transition of color values for the run length between decision points when the encoded information is to be retrieved. In this technique, for each scan line an initial color is transmitted, followed by as many sequences of run length and color values as are necessary to represent the picture frame content. In either implementation the information is displayed as a series of slopes. For the run length encoded data artificial color slopes are inserted into the display line as shown in Fig. 5. In this case the slopes are generated as a function of the luminance shift between runs and the length of the adjoining runs as shown in Fig. 6.

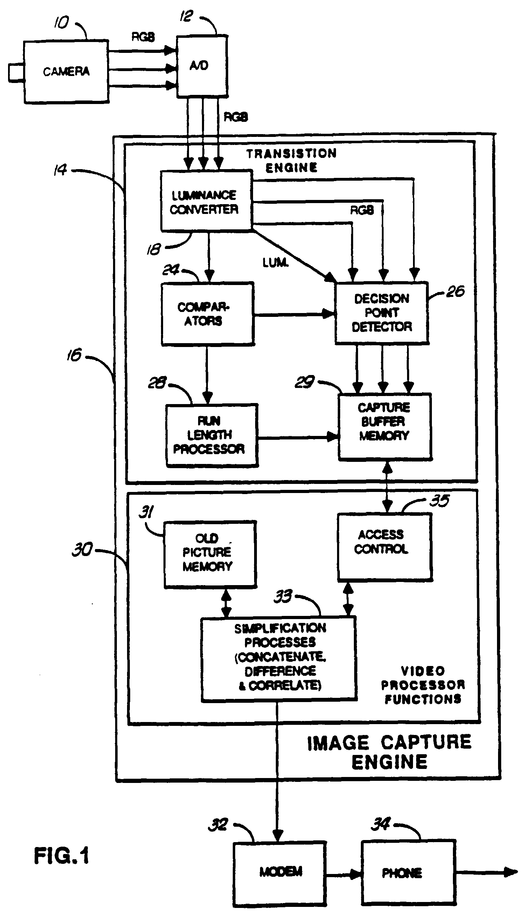

In the image capture engine of Fig. 1, the decision point detector 26 for determining decision points may alternatively be able to utilize either one of these methods for fixing the decision points in the color of the pixels in the picture, as each method has its respective advantages and disadvantages. The feature coding technique is typically more appropriate for pictures with a complexity of objects with distinctive edges or lines. On the other hand, the slope encoding technique is most suitable for encoding gradual transitions in shading or gradual color changes, but may require additional coding to represent complex pictures with images having many edges and lines. In the preferred implementation of the slope encoding technique, a sequence of thresholds will be compared with decision parameters, and the cumulative parameter (cum-diff) and an adaptive cumulative threshold will also be utilized in predetermined decision points, to account for those slow, gradual rates of change of luminance which would still result in an accumulated luminance change which is significant enough to merit identification of a decision point.

The three component color codes are also operated on in the run length processor 28 to drop the two least significant bits from the six bit values for the color components, reducing each of the color components in the preferred mode to four bit digital words. Alternatively, the transition engine may also contain a predetermined color map representation of three-component colors, with an n-bit code corresponding to a particular color combination. Here, the colors of the image are matched as closely as possible with the colors in the color map. As a further alternative, the color codes could also be rounded. These truncated or reduced digital color components are then encoded with the run lengths between decision points in the run length processor 28. Although the preferred bit size for the reduced color components is four bits, just as the input digital word size for the color components from the analog front end can be of different sizes to vary the informational content, the reduced digital color components may also be of different sizes. A particular combination of digital word sizes for color components may include a reduced size for the red component, due to the recognition in the industry of the reduced perceptibility of this component.

These encoding techniques allow for a variable number of bits to be used to represent an initial picture frame and then changes in subsequent picture frames, in order to encode the minimum number of bits for each picture frame. This is significant a improvement over the prior art which typically analyzes a four by four or three by three block of pixels to compress the information in such a block, which always results in the same number of bits being utilized to represent the informational content in the picture, whether there have been changes outside the segment or not.

The second major portion of the image capture engine is the capture buffer memory (CBM) 29, which receives the encoded run lengths and reduced color components representing some 200 lines of data from the picture frame. Alternatively, if the data rate required becomes too high to send pictures at a desired speed, lesser numbers of scan lines can be stored, such as 150 or 100 lines. The run length and color component information in the capture buffer memory is then transmitted to the video data processor 30, which accesses the run length and color data in the capture buffer memory by an access control 35, and operates as an interface to transform and transmit the video information in a format suitable for transmission by the modem 32, connected to the telephone 34, and which may include means for further compressing the video data, at 33. The video data may also be compared with a previous picture frame stored in an old picture memory 31.

It is possible in a simplification processor 33 of a video data processor 30 to further analyze the difference between color values of pixels after the color codes have been truncated to provide the reduced color component codes, and to concatenate run lengths of such reduced color component codes which vary less than a given threshold value, or to further concatenate run lengths of the reduced color codes based upon variance of one or more of the decision parameters with respect to a corresponding threshold. As the run length code is typically at a maximum of four bits to be compatible with run length and color code combinations of 16 bits, with 16 bit computer buses in the current implementation, concatenation of a sequence of pixels for each run length would be expected to permit coding of up to sixteen pixels per run length. However, in the current implementation the values 0 to 15 are used to represent run lengths of from 2 to 17 pixels, since run lengths of 0 and 1 are not meaningful. Alternatively, longer run lengths may be determined initially as well, as may be compatible with different capacity computer buses, to permit run lengths of greater than 4 bits and run length color code combinations greater than 16 bits.

As mentioned previously, it is expected that the limits of compression required for adequate smoothing of information in a real time sequencing of video pictures in telecommunication would be about 15 frames per second for transmission over conventional telephone lines. It would be possible to use a modem at 1200 bits per second (bps), but this would considerably slow the number of frames per second possible in the communication system. Ideally, the system is configured for half duplex mode, and a full duplex mode of configuration would be expected to require two telephone lines. Ideally the modem that is to be used is one which would utilize the largest bandwidth possible, and may be conventional 2400 bps or 9600 bps modem or special modems providing higher bit rates may be used.

Although the compression technique has been described in the context of a video telephone conferencing system, the technique may be also be adapted for use in compressing color video data on magnetic media, such as magnetic floppy discs which may be used in storing and communicating such data via computer systems, magnetic hard disks for image storage or short video movie sequences, or on video discs for video disc players which could transmit the information in the form of a full length movie.

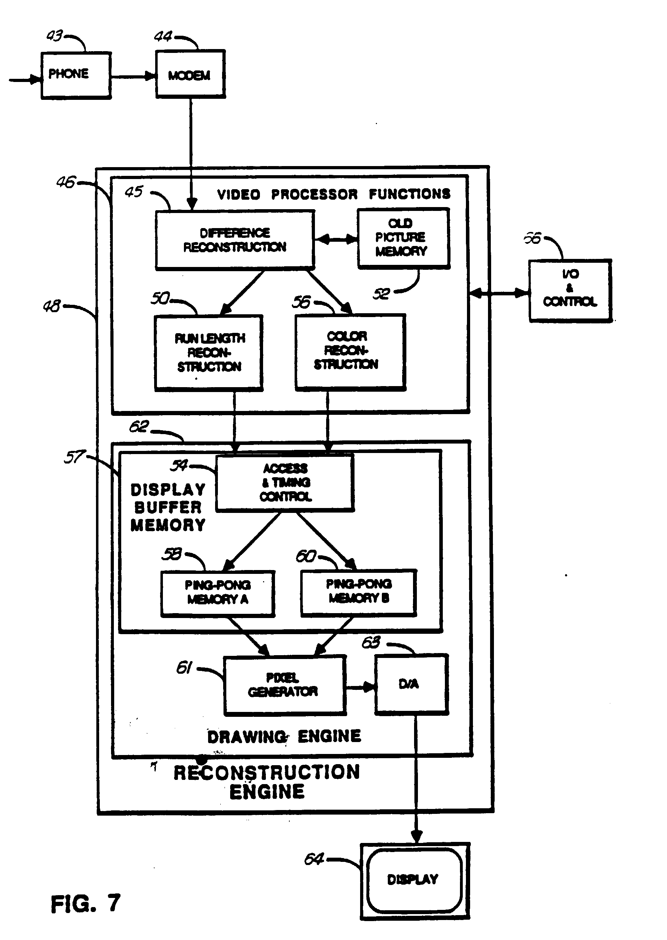

With reference to Fig. 7, in the preferred embodiment, a telephone 43 receives a transmitted signal from a transmitter modem over ordinary telephone lines and the receiver modem 44 converts these signals to an electronically digitized format to be receivable by video data processor 46. The video data processor then adapts the digitized signals which represent encoded run length and color information to a format which is acceptable for reception by the drawing engine 62. The drawing engine of the reconstruction engine 48 converts the run length data to slope form and presents it pixel by pixel to the digtal to analog converter for use by the monitor. Alternatively, the video processor interface could be adapted to receive the compressed color video data from a computer system 66 retrieving the information from magnetic media, such as a hard disc or high capacity floppy discs, or from a video disc player for displaying a much greater length series of video picture frames, in a form such as for a video movie. The video data processor preferably includes microprocessor means and associated memory means (not shown) programmed to carry out various functions. One function is to reconstruct a total picture frame data representation in terms of run length and color codes from an old picture memory 52 of the last picture frame data, and an array of the run lengths and color codes which have changed from the last picture frame. This difference reconstruction function 45 prepares picture frame data for run length reconstruction at 50 and color code reconstruction 56, utilizing control signals embedded in the run length and color data.

As the run length and color information are received by the video data processor 46 of the reconstruction engine 48, the digitized signals are typically of a digital word size of sixteen bits. The number may vary, depending upon the type of statistical encoding used. Alternatively a color code (which may be from 4 to 8 bits in length) may be used to select specific colors from a map or pallet so that fewer bits need to be sent. As compressed and encoded from an input construction engine as described earlier, the digital word size of the run length portion actually processed would typically be four bits, and the digital word size of the color code portion would be twelve bits. As mentioned previously, the preferred apportioning of bit sizes of the three color component codes is such that each digital color code component is of a digital word size of four bits. However, only small portions of the picture which have actually changed may be actually encoded, with appropriate control data for skipping run lengths which may not have changed being embedded in the transmitted information. The run length reconstruction or decoder function 50 of the video data processor operates to separate the run length portion from the digitized signal, and the color code reconstruction function 56 of the video data processor, for decoding the color codes, can separate the digital color components from the incoming digitized signals. However, advanced signal processing and compression of the data may also involve the concatenation of run lengths to a digital word size of eight or nine bits, so that the run length decoder function would then also operate to separate the eight or nine bit digital word size into four bit digital word portions. In the event that the run length codes were concatenated to an eight or nine bit digital word size, the color code portion would have also have been subjected to advanced data compression techniques to reduce the three digital color codes each of four bits to a combined color code portion having a digital word size of eight bits. The color reconstruction function 56 would then also operate to convert the eight bit digital color codes to three digital color codes of the four bit digital word size.

From the reconstruction engine run length decoder and color codes sections the run length and color code information is transferred from the video data processor via the access and timing control circuitry 54 in the drawing engine 62 to a drawing engine display buffer memory 57 which ideally comprises dual memory buffers, pingpong A 58 and pingpong B 60. The access and timing control 54, under the direction of the video processor, sends the reconstructed run length and color information for storing in one of the ping pong buffer memory portions until the information for an individual picture frame is complete; that picture is then displayed while the next sequential picture information received by the system is sent and stored in a similar fashion in the second portion of the display buffer memory. Each block of the display buffer memory needs to be of a sufficient capacity to avoid overflow of the memory by the run length and color code information, and it has been found that a random access memory of a capacity of 32K 16 bit digital words is adequate for the picture reconstruction.

The drawing engine 62 includes a pixel generator 61 for converting the run length and color codes stored in the individual pingpong memories to individual points for display on a monitor 64. The access and timing control 54 of the drawing engine is responsible for all display timing and control for the pixel generator. The drawing engine generates a write strobe to write the runs of color information to the series of points to be converted from digital to analog for display.

In the embodiment for pixel generation from feature encoded run length data, each end of a run length of a particular color combination is essentially tapered to provide a smooth color transition from one run length to another. The resulting smoothed reconstructed video line 41 is depicted in Figure 6. When a run length is short, it usually is an indication that the color level is changing rapidly. If the run length is long, it usually indicates the color level is changing slowly. When the change in the luminance function, given by one of the decision parameters, is large, it usually indicates a high probability of an edge in a picture, whereas if the change is small, it is probably an indication of a shading effect. Based upon the run lengths and one or more decision parameters, the pixel generator determines where intermediate decision points should be placed, and interpolates smooth color transitions for each of the RGB color components from one intermediate decision point to the next. The ends of each scan line similarly transition when they contact another color, so that the beginning and ending of a scan line may have a single intermediate decision point adjacent the end, to define a relatively sharp transition from the edge of the picture to the adjacent color. The interpolation is preferably performed linearly, but may also alternatively be shaped to more faithfully depict curved surfaces.

The pixel generator of the drawing engine includes all the necessary functional sections to implement the color interpolation between pairs of points designated by the run lengths, and preferably converts the four bit color components to either six or eight bit digital words, for six or eight bit precision, in three separate channels, with one for each of the RGB components. Increasing the bit size allows the pixel generator to generate smoother gradations of color transitions between pixels of different colors. For example, although four bit digital word sizes permit up to 4,096 color combinations of red, green and blue components, only up to 16 gradations of any one of the color components would be possible. Increasing the bit size up to 6 allows for up to 64 gradations of any individual component, and up to 262,144 total combinations. An eight bit digital word size permits an even greater range of gradations for an individual component. However, as discussed previously, the full digital word sizes for the color components need not be equal, and may be in fact arranged so as to allow a broader range of colors for one or two of the color components, at the expense of one of the color components which would only require a smaller digital word size to accommodate its perceptibility. The pixel generator therefore dynamically generates a complete digital representation of the pixels of a picture frame to be displayed on a pixel-by-pixel basis, and this information is transmitted on RGB three channels from the pixel generator to the digital to analog converter 63 which converts the video signal to analog form for displaying on the monitor 64.

In the foregoing description, it has been demonstrated that the method and system for compressing and decompressing color video data can achieve a significant elimination of extraneous noise introduced by a video camera, and can result in a significant improvement in coding of the minimum amount of information necessary to reconstruct color video picture frames in a real time sequencing of video pictures.

It is also significant in the method and system for decompressing color video data that the mapping of the video picture information is accomplished while the color code information is in a digitally compressed form, so that picture information may be rapidly completed in the pingpong buffer memory, from which a complete pixel by pixel representation is formed in the display drawing engine, until a new, complete set of picture information is received in the other pingpong memory. It is also significant that the display drawing engine interpolates a smooth color transition from the data for maximum coding of a large amount of complex picture information.

## Claims

1. A method of decompressing color video data comprising a plurality of digitized signals, each said digitized signal comprising a run length portion representing a run length which is a number of sequential pixels along one of a plurality of scan lines of a video picture frame, said run length being defined to have the same three digital color component signals for each pixel of said run length, and a color portion representing said three digital color component signals in a compressed form for said run length, each of said digitized signals being of a first digital word size, said run length portion of each of said digitized signals being of a second digital word size, and said color portion of each of said digitized signals being of a third digital word size; the method comprising the steps of:

    a) a first decompressing step of decompressing said color portion of each of said digitized signals into three digital color component signals of fourth, fifth and sixth digital word sizes, respectively, the sum of said fourth, fifth and sixth digital word sizes being greater than said third digital word size;

    b) storing each said run length portion and associated said digital color component signals decompressed by said first decompressing step as an array in a memory means (58, 60) representing said pixels in said plurality of scan lines in said video picture frame; and

c) a second decompressing step comprising generating a color video display signal for each said pixel from said run length portions and said associated digital color component signals decompressed by said first decompressing step.

2. The method of Claim 1, wherein said step of generating a color video display signal further comprises generating the pixels for each said run length according to said associated digital color component signals from a starting pixel for said run length to an ending pixel for said run length; and providing a smooth color transition between adjacent starting and ending pixels of adjacent run lengths by interpolating a smooth color transition from either a predetermined intermediate pixel or said starting pixel of one run length to either a predetermined intermediate pixel or said ending pixel of the adjacent run length.

3. The method of Claim 1, wherein said step of generating a color video display signal further comprises generating a starting pixel for each run length from said associated digital color component signals; generating an ending pixel for each said run length from said associated digital color component signals; and generating the remaining pixels in each said run length by interpolating a smooth color transition from the starting pixel to the ending pixel of each said run length.

4. The method of any one of Claims 1, 2 or 3, wherein said step of storing said run length portion and said associated digital color component signals in said memory means (58, 60) further comprises alternately storing a first set of run length portions and said associated digital color component signals in a first buffer memory (58), and sequentially storing a second set of run length portions and said associated digital color component signals in a second buffer memory (60), and repeating said steps of storing in said first and second buffer memories (58, 60) for subsequent sets of run length portions and associated digital color component signals.

5. The method of Claim 4, further comprising sequentially presenting said sets to a pixel generator (61) from said first memory buffer (58) and said second memory buffer (60) after the storage of each said set in each said memory buffer (58, 60) is completed.

6. The method of any one of Claims 1 to 5, wherein said run length portion of each of said digitized signals is a concatenation of unconcatenated run length portions of seventh digital word size smaller than said second digital word size, the method further including the initial step of dividing each of said digitized signals that includes a concatenated run length portion into a plurality of digitized signals that each includes an unconcatenated run length portion.

7. The method of any one of Claims 1 to 5, further including the step of receiving skip codes representing run length portions and said associated digital color component signals in the scan lines to be skipped over in the storing of said run length portions and said associated digital color component signals of said scan lines of said picture frame in said memory means (58, 60), whereby only said run length portions and said associated digital color component signals which have changed in said picture frame with regard to previous video data are stored in said memory means (58, 60).

8. A system for decompressing color video data comprising a plurality of digitized signals, each said digitized signal comprising a run length portion representing a run length which is a number of sequential pixels along one of a plurality of scan lines of a video picture frame, said run length being defined to have the same three digital color component signals for each pixel of said run length, and a color portion representing said three digital color component signals in a compressed form for said run length, each of said digitized signals being of a first digital word size, said run length portion of each of said digitized signals being of a second digital word size, and said color portion of each of said digitized signals being of a third digital word size; the system comprising:

a) means (56) for performing a first decompressing step of decompressing said color portion of each of said digitized signals into three digital color component signals of fourth, fifth, and sixth digital word sizes, respectively, the sum of said fourth, fifth and sixth digital word sizes being greater than said third digital word size;

b) means (54) for storing each said run length portion and associated said digital color component signals decompressed by said first decompressing step as an array in memory means (58, 60) representing said pixels in said plurality of scan lines in said video picture frame; and

c) means (61) for performing a second decompression step comprising generating a color video display signal for each said pixel from said run length portion and said associated digital color component signals decompressed by said first decompressing step.

9. The system of Claim 8, wherein said means (61) for generating a color video display signal comprises means for generating the pixels for each said run length according to said digital color component signals from a starting pixel for said run length to an ending pixel for said run length; and means for providing a smooth color transition between adjacent starting and ending pixels of adjacent run lengths by interpolating a smooth color transition from either a predetermined intermediate pixel or said starting pixel of one run length to either a predetermined intermediate pixel or said ending pixel of the adjacent run length.

10. The system of Claim 8, wherein said means (61) for generating a color video display signal comprises means for generating a starting pixel for each run length from said associated digital color component signals; means for generating an ending pixel for each said run length from said associated digital color component signals; and means for generating the remaining pixels in each said run length by interpolating a smooth color transition from the starting pixel to the ending pixel of each said run length.

11. The system of any one of Claims 8, 9 or 10, wherein said means (54) for storing said run length portion and said associated digital color component signals in said memory means (58, 60) comprises means (54) for alternately storing a first set of said run length portions and said associated digital color component signals in a first buffer memory (58), and sequentially storing a second set of said run length portions and said associated digital color component signals in a second buffer memory (60), and for repeating said steps of storing in aid first and second buffer memories (58, 60) for subsequent sets of run length portions and said associated digital color component signals.

12. The system of Claim 11, further comprising means for sequentially presenting said sets to a pixel generator (61) from said first memory buffer (58) and said second memory buffer (60) after the storage of each said set in each said memory buffer (58, 60) is completed.

13. The system of any one of Claims 8 to 12, wherein said run length portion of each of said digitized signals is a concatenation of unconcatenated run length portions of seventh digital word size smaller than said second digital word size, the system further including means (50) for dividing each of said digitized signals that includes a concatenated run length portion into a plurality of digitized signals that each includes an unconcatenated run length portion.

14. The system of any one of Claims 8 to 13, further including means (45) for receiving skip codes representing run length portions and said associated digital color component signals in the scan lines to be skipped over in the storing of said run length portions and said associated digital color component signals of said scan lines of said picture frame in said memory means (58, 60), whereby only said run length portions and said associated color digital component signals which have changed in said picture frame with regard to previous video data are stored in said memory means (58, 60).

**Patentansprüche**

1. Verfahren zum Dekomprimieren von Farbvideodaten, welche eine Mehrzahl von digitalisierten Signalen umfassen, wobei die digitalisierten Signale jeweils einen Lauflängenabschnitt umfassen, welcher eine Lauflänge darstellt, die eine Anzahl von sequentiellen Pixeln längs einer einer Mehrzahl von Abtastzeilen eines Videobilds ist, wobei diese Lauflänge derart definiert ist, daß sie für jedes Pixel der Lauflänge dieselben drei digitalen Farbkomponentensignale aufweist, wobei die digitalisierten Signale jeweils ferner einen Farbabschnitt umfassen, welcher die drei digitalen Farbkomponentensignale für die Lauflänge in komprimierter Form darstellt, wobei jedes der digitalisierten Signale eine erste Digitalwortgröße besitzt, wobei der Lauflängenabschnitt der digitalisierten Signale jeweils eine zweite Digitalwortgröße besitzt und wobei der Farbabschnitt der digitalisierten Signale jeweils eine dritte Digitalwortgröße besitzt, wobei das Verfahren die Schritte umfaßt:

a) einen ersten Dekomprimierungsschritt zur Dekomprimierung des Farbabschnitts jedes der digitalisierten Signale in drei digitale Farbkomponentensignale einer vierten, fünften bzw. sechsten Digitalwortgröße, wobei die Summe der vierten, fünften und sechsten Digitalwortgröße größer als die dritte Digitalwortgröße ist,
b) Speichern jedes Lauflängenabschnitts und der zugehörigen, durch den ersten Dekomprimierungsschritt dekomprimierten digitalen Farbkomponentensignale als Feld in einer Speichereinrichtung (58, 60), welche die Pixel in der Mehrzahl von Abtastzeilen in dem Videobild darstellt, und
c) einen zweiten Dekomprimierungsschritt, welcher die Erzeugung eines Farbvideoanzeigesignals für jedes Pixel anhand der Lauflängenabschnitte und der zugehörigen, durch den ersten Dekomprimierungsschritt dekomprimierten digitalen Farbkomponentensignale umfaßt.

**2.** Verfahren nach Anspruch 1, bei dem der Schritt der Erzeugung eines Farbvideoanzeigesignals ferner die Erzeugung der Pixel für jede Lauflänge nach Maßgabe der zugehörigen digitalen Farbkomponentensignale von einem Startpixel für die Lauflänge bis zu einem Endpixel für die Lauflänge umfaßt sowie die Vorsehung eines weichen Farbübergangs zwischen benachbarten Start- und Endpixeln benachbarter Lauflängen durch Interpolieren eines weichen Farbübergangs von entweder einem vorbestimmten Zwischenpixel oder dem Startpixel einer Lauflänge zu entweder einem vorbestimmten Zwischenpixel oder dem Endpixel der benachbarten Lauflänge umfaßt.

**3.** Verfahren nach Anspruch 1, bei dem der Schritt der Erzeugung eines Farbvideoanzeigesignals ferner die Erzeugung eines Startpixels für jede Lauflänge anhand der zugehörigen digitalen Farbkomponentensignale umfaßt, die Erzeugung eines Endpixels für jede Lauflänge anhand der zugehörigen digitalen Farbkomponentensignale umfaßt sowie die Erzeugung der verbleibenden Pixel in jeder Lauflänge durch Interpolieren eines weichen Farbübergangs von dem Startpixel zu dem Endpixel der jeweiligen Lauflänge umfaßt.

**4.** Verfahren nach einem der Ansprüche 1, 2 oder 3, bei dem der Schritt der Speicherung des Lauflängenabschnitts und der zugehörigen digitalen Farbkomponentensignale in der Speichereinrichtung (58, 60) ferner das abwechselnde Speichern eines ersten Satzes von Lauflängenabschnitten und zugehörigen digitalen Farbkomponentensignalen in einem ersten Pufferspeicher (58) und das folgende Speichern eines zweiten Satzes von Lauflängenabschnitten und zugehörigen digitalen Farbkomponentensignalen in einem zweiten Pufferspeicher (60) umfaßt sowie die Wiederholung der Schritte des Speicherns in dem ersten und dem zweiten Pufferspeicher (58, 60) für nachfolgende Sätze von Lauflängenabschnitten und zugehörigen digitalen Farbkomponentensignalen umfaßt.

**5.** Verfahren nach Anspruch 4, ferner umfassend das sequentielle Überreichen der Sätze aus dem ersten Speicherpuffer (58) und dem zweiten Speicherpuffer (60) an einen Pixelgenerator (61), nachdem die Speicherung jedes Satzes in dem jeweiligen Speicherpuffer (58, 60) abgeschlossen ist.

**6.** Verfahren nach einem der Ansprüche 1 bis 5, bei dem der Lauflängenabschnitt jedes der digitalisierten Signale eine Verknüpfung von unverknüpften Lauflängenabschnitten einer siebten Digitalwortgröße ist, welche kleiner als die zweite Digitalwortgröße ist, wobei das Verfahren ferner den anfänglichen Schritt der Aufteilung jedes der digitalisierten Signale, welches einen verknüpften Lauflängenabschnitt enthält, in eine Mehrzahl von digitalisierten Signalen umfaßt, welche jeweils einen unverknüpften Lauflängenabschnitt enthalten.

**7.** Verfahren nach einem der Ansprüche 1 bis 5, ferner umfassend den Schritt des Empfangens von Sprungcodes, welche Lauflängenabschnitte und zugehörige digitale Farbkomponentensignale in den Abtastzeilen darstellen, die bei der Speicherung der Lauflängenabschnitte und der zugehörigen digitalen Farbkomponentensignale der Abtastzeilen des Bilds in der Speichereinrichtung (58, 60) zu überspringen sind, wodurch lediglich die Lauflängenabschnitte und die zugehörigen digitalen Farbkomponentensignale in der Speichereinrichtung (58, 60) gespeichert werden, die sich in dem Bild im Hinblick auf vorherige Videodaten geändert haben.

**8.** System zum Dekomprimieren von Farbvideodaten, welche eine Mehrzahl von digitalisierten Signalen umfassen, wobei die digitalisierten Signale jeweils einen Lauflängenabschnitt umfassen, welcher eine Lauflänge darstellt, die eine Anzahl von sequentiellen Pixeln längs einer einer Mehrzahl von Abtastzeilen eines Videobilds ist, wobei diese Lauflänge derart definiert ist, daß sie für jedes Pixel der Lauflänge dieselben drei digitalen Farbkomponentensignale aufweist, wobei die digitalisierten Signale ferner jeweils einen Farbabschnitt umfassen, welcher die drei digitalen Farbkomponentensignale für die Lauflänge in komprimierter Form darstellt, wobei jedes der digitalisierten Signale eine erste Digitalwortgröße besitzt, wobei der Lauflängenabschnitt jedes der digitalisierten Signale eine zweite Digitalwortgröße besitzt und wobei der Farbabschnitt jedes der digitalisierten Signale eine dritte Digitalwortgröße besitzt, wobei das System umfaßt:

a) Mittel (56) zum Durchführen eines ersten Dekomprimierungsschritts zur Dekomprimierung des Farbabschnitts jedes der digitalisierten Signale in drei digitale Farbkomponentensignale einer vierten, fünften bzw. sechsten Digitalwortgröße, wobei die Summe der vierten, fünften und sechsten Digitalwortgröße größer als die dritte Digitalwortgröße ist,
b) Mittel (54) zum Speichern jedes Lauflängenabschnitts und der zugehörigen, durch den ersten Dekomprimierungsschritt dekomprimierten digitalen Farbkomponentensignale als Feld in einer Speichereinrichtung (58, 60), welche die Pixel in der Mehrzahl von Abtastzeilen in dem Videobild darstellt, und
c) Mittel (61) zum Durchführen eines zweiten Dekomprimierungsschritts, welcher die Erzeugung eines Farbvideoanzeigesignals für jedes Pixel anhand des Lauflängenabschnitts und der zugehörigen, durch den ersten Dekomprimierungsschritt dekomprimierten digitalen Farbkomponentensignale umfaßt.

9. System nach Anspruch 8, bei dem die Mittel (61) zum Erzeugen eines Farbvideoanzeigesignals Mittel zum Erzeugen der Pixel für jede Lauflänge nach Maßgabe der digitalen Farbkomponentensignale von einem Startpixel für die Lauflänge bis zu einem Endpixel für die Lauflänge umfassen sowie Mittel zum Vorsehen eines weichen Farbübergangs zwischen benachbarten Start- und Endpixeln benachbarter Lauflängen durch Interpolieren eines weichen Farbübergangs von entweder einem vorbestimmten Zwischenpixel oder dem Startpixel einer Lauflänge zu entweder einem vorbestimmten Zwischenpixel oder dem Endpixel der benachbarten Lauflänge umfassen.

10. System nach Anspruch 8, bei dem die Mittel (61) zum Erzeugen eines Farbvideoanzeigesignals Mittel zum Erzeugen eines Startpixels für jede Lauflänge anhand der zugehörigen digitalen Farbkomponentensignale umfassen, Mittel zum Erzeugen eines Endpixels für jede Lauflänge anhand der zugehörigen digitalen Farbkomponentensignale umfassen sowie Mittel zum Erzeugen der verbleibenden Pixel in jeder Lauflänge durch Interpolieren eines weichen Farbübergangs von dem Startpixel zu dem Endpixel der jeweiligen Lauflänge umfassen.

11. System nach einem der Ansprüche 8, 9 oder 10, bei dem die Mittel (54) zum Speichern des Lauflängenabschnitts und der zugehörigen digitalen Farbkomponentensignale in der Speichereinrichtung (58, 60) Mittel (54) zum abwechselnden Speichern eines ersten Satzes von Lauflängenabschnitten und zugehörigen digitalen Farbkomponentensignalen in einem ersten Pufferspeicher (58) und zum folgenden Speichern eines zweiten Satzes von Lauflängenabschnitten und zugehörigen digitalen Farbkomponentensignalen in einem zweiten Pufferspeicher (60) und zum Wiederholen der Schritte des Speicherns in dem ersten und dem zweiten Pufferspeicher (58, 60) für nachfolgende Sätze von Lauflängenabschnitten und zugehörigen digitalen Farbkomponentensignalen umfassen.

12. System nach Anspruch 11, ferner umfassend Mittel zum sequentiellen Überreichen der Sätze aus dem ersten Speicherpuffer (58) und dem zweiten Speicherpuffer (60) an einen Pixelgenerator (61), nachdem die Speicherung jedes Satzes in dem jeweiligen Speicherpuffer (58, 60) abgeschlossen ist.

13. System nach einem der Ansprüche 8 bis 12, bei dem der Lauflängenabschnitt jedes der digitalisierten Signale eine Verknüpfung von unverknüpften Lauflängenabschnitten einer siebten Digitalwortgröße ist, welche kleiner als die zweite Digitalwortgröße ist, wobei das System ferner Mittel (50) zum Aufteilen jedes der digitalisierten Signale, welches einen verknüpften Lauflängenabschnitt enthält, in eine Mehrzahl von digitalisierten Signalen umfaßt, welche jeweils einen unverknüpften Lauflängenabschnitt enthalten.

14. System nach einem der Ansprüche 8 bis 13, ferner umfassend Mittel (45) zum Empfangen von Sprungcodes, welche Lauflängenabschnitte und zugehörige digitale Farbkomponentensignale in den Abtastzeilen darstellen, die bei der Speicherung der Lauflängenabschnitte und der zugehörigen digitalen Farbkomponentensignale der Abtastzeilen des Bilds in der Speichereinrichtung (58, 60) zu überspringen sind, wodurch lediglich die Lauflängenabschnitte und die zugehörigen digitalen Farbkomponentensignale in der Speichereinrichtung (58, 60) gespeichert werden, die sich in dem Bild im Hinblick auf vorherige Videodaten geändert haben.

## Revendications

1. Procédé de décompression de données vidéo en couleur comprenant une pluralité de signaux numérisés, chacun desdits signaux numérisés comprenant une partie de longueur d'exécution représentant une longueur d'exécution qui est un nombre de pixels séquentiels le long d'une pluralité de lignes de balayage d'une trame d'image vidéo, ladite longueur d'exécution étant définie de façon à comporter les trois mêmes signaux de composantes de couleur numériques pour chaque pixel de chacune desdites longueur d'exécution, et une partie de couleur représentant lesdits trois signaux de composantes de couleur numériques sous une forme comprimée pour ladite longueur d'exécution, chacun desdits signaux numérisés ayant une première taille de mot numérique, ladite partie de longueur d'exécution de chacun desdits signaux numérisés ayant une deuxième taille de mot numérique, et ladite partie de couleur de chacun desdits signaux numérisés ayant une troisième taille de mot numérique ; le procédé comprenant les étapes suivantes :

a) une première étape de décompression consistant à décomprimer ladite partie de couleur de chacun desdits signaux numériques en trois signaux de composantes de couleur numériques de quatrième, cinquième et sixième tailles de mot numérique, respectivement, la somme desdites quatrième, cinquième et sixième tailles de mot numérique étant supérieure à ladite troisième taille de mot numérique ;

b) la mémorisation de chacune desdites parties de longueur d'exécution et desdits signaux de composantes de couleur numériques associés décomprimés par ladite première étape de décompression sous la forme d'un groupement dans des moyens formant mémoire (58, 60) représentant lesdits pixels dans ladite pluralité de lignes de balayage dans ladite trame d'image vidéo ; et

c) une deuxième étape de décompression comprenant la génération d'un signal de visualisation vidéo en couleur pour chacun desdits pixels desdites parties de longueur d'exécution et desdits signaux de composantes de couleur numériques associés décomprimés par ladite première étape de décompression.

2. Procédé selon la revendication 1, dans lequel ladite étape de génération d'un signal de visualisation vidéo en couleur comprend de plus la génération des pixels pour chacune desdites longueurs d'exécution selon lesdits signaux de composantes de couleur numériques associés d'un pixel de démarrage pour ladite longueur d'exécution à un pixel de fin pour ladite longueur d'exécution ; et la réalisation d'une transition de couleur douce entre les pixels de démarrage et de fin adjacents de longueurs d'exécution adjacentes en interpolant une transition de couleur douce de l'un ou l'autre parmi un pixel intermédiaire prédéterminé ou ledit pixel de démarrage d'une longueur d'exécution à l'un ou l'autre parmi un pixel intermédiaire prédéterminé ou ledit pixel de fin de la longueur d'exécution adjacente.

3. Procédé selon la revendication 1, dans lequel ladite étape de génération d'un signal de visualisation vidéo en couleur comprend de plus la génération d'un pixel de démarrage pour chaque longueur d'exécution à partir desdits signaux de composantes de couleur numériques associés ; la génération d'un pixel de fin pour chacune desdites longueurs d'exécution depuis lesdits signaux de composantes de couleur numériques associés ; et la génération des pixels restants dans chacune desdites longueurs d'exécution en interpolant une transition de couleur douce du pixel de démarrage au pixel de fin de chacune desdites longueurs d'exécution.

4. Procédé selon l'une quelconque des revendications 1, 2 ou 3, dans lequel ladite étape de mémorisation de ladite partie de longueur d'exécution et desdits signaux de composantes de couleur numériques associés dans lesdits moyens formant mémoire (58, 60) comprend de plus la mémorisation en alternance d'un premier jeu de parties de longueur d'exécution et desdits signaux de composantes de couleur numériques associés dans une première mémoire tampon (58), et la mémorisation en séquence d'un deuxième jeu de parties de longueur d'exécution et desdits signaux de composantes de couleur numériques associés dans une deuxième mémoire tampon (60), et la répétition desdites étapes de mémorisation dans lesdites première et deuxième mémoires tampons (58, 60) pour des jeux suivants de parties de longueur d'exécution et de signaux de composantes de couleur numériques associés.

5. Procédé selon la revendication 4, comprenant de plus la présentation séquentielle desdits jeux à un générateur de pixels (61) à partir de ladite première mémoire tampon (58) et de ladite deuxième mémoire tampon (60) après que la mémorisation de chacun desdits jeux dans chacune desdites mémoires tampons (58, 60) ait été achevée.

6. Procédé selon l'une quelconque des revendications 1 à 5, dans lequel ladite partie de longueur d'exécution de chacun desdits signaux numérisés est une concaténation de parties de longueur d'exécution non concaténées d'une septième taille de mot numérique inférieure à ladite deuxième taille de mot numérique, le procédé comprenant de plus l'étape initiale de division de chacun desdits signaux numérisés qui comprend une partie de longueur d'exécution concaténée en une pluralité de signaux numérisés qui comprennent chacun une partie de longueur d'exécution non concaténée.

7. Procédé selon l'une quelconque des revendications 1 à 5, comprenant de plus l'étape de réception de codes de saut représentant des parties de longueur d'exécution et desdits signaux de composantes de couleur numériques associés dans les lignes de balayage par dessus lesquelles il faut sauter lors de la mémorisation desdites parties de longueur d'exécution et desdits signaux de composantes de couleur numériques associés desdites lignes de balayage de ladite trame d'image dans lesdits moyens formant mémoire (58, 60), grâce à quoi seules lesdites parties de longueur d'exécution et lesdits signaux de composantes de couleur numériques associés qui ont changé dans ladite trame d'image par rapport aux données vidéo précédentes sont mémorisés dans lesdits moyens formant mémoire (58, 60).

8. Système pour décomprimer des données vidéo en couleur comprenant une pluralité de signaux numérisés, chacun desdits signaux numérisés comprenant une partie de longueur d'exécution représentant une longueur d'exécution qui est un nombre de pixels séquentiels le long de l'une d'une pluralité de lignes de balayage d'une trame d'image vidéo, ladite longueur d'exécution étant définie de façon à comporter les trois mêmes signaux de composantes de couleur numériques pour chaque pixel de ladite longueur d'exécution, et une partie de couleur représentant lesdits trois signaux de composantes de couleur numériques sous forme comprimée pour ladite longueur d'exécution, chacun desdits signaux numérisés ayant une première taille de mot numérique, ladite partie de longueur d'exécution de chacun desdits signaux numérisés ayant une deuxième taille de mot numérique, et ladite partie de couleur de chacun desdits signaux numérisés ayant une troisième taille de mot numérique ; le système comprenant :

a) des moyens (56) pour effectuer une première étape de décompression pour décomprimer ladite partie de couleur de chacun desdits signaux numérisés en trois signaux de composantes de couleur numériques de quatrième, cinquième et sixième tailles de mot numérique, respectivement, la somme desdites quatrième, cinquième et sixième tailles de mot numérique étant supérieure à ladite troisième taille de mot numérique ;

b) des moyens (54) pour mémoriser chacune desdites parties de longueur d'exécution et desdits signaux de composantes de couleur numériques associés décomprimés par ladite première étape de décompression sous la forme d'un groupement de moyens formant mémoire (58, 60) représentant lesdits pixels dans ladite pluralité de lignes de balayage dans ladite trame d'image vidéo ; et

c) des moyens (61) pour réaliser une deuxième étape de décompression comprenant la génération d'un signal de visualisation vidéo en couleur pour chacun desdits pixels à partir de ladite partie de longueur d'exécution et desdits signaux de composantes de couleur numériques associés décomprimés par ladite première étape de décompression.

9. Système selon la revendication 8, dans lequel lesdits moyens (61) pour générer un signal de visualisation vidéo en couleur comprennent des moyens pour générer les pixels pour chacune desdites longueurs d'exécution en fonction desdits signaux de composantes de couleur numériques d'un pixel de démarrage pour ladite longueur d'exécution à un pixel de fin pour ladite longueur d'exécution ; et des moyens pour réaliser une transition de couleur douce entre les pixels de démarrage et de fin adjacents de longueur d'exécution adjacentes en interpolant une transition de couleur douce d'un pixel intermédiaire prédéterminé ou dudit pixel de démarrage d'une longueur d'exécution à un pixel intermédiaire prédéterminé ou audit pixel de fin de la longueur d'exécution adjacente.

10. Système selon la revendication 8, dans lequel lesdits moyens (61) pour générer un signal de visualisation vidéo en couleur comprennent des moyens pour générer un pixel de démarrage pour chaque longueur d'exécution depuis lesdits signaux de composantes de couleur numériques associés ; des moyens pour générer un pixel de fin pour chacune desdites longueurs d'exécution à partir desdits signaux de composantes de couleur numériques associés ; et des moyens pour générer les pixels restants dans chacune desdites longueurs d'exécution en interpolant une transition de couleur douce du pixel de démarrage au pixel de fin de chacune desdites longueurs d'exécution.

11. Système selon l'une quelconque des revendications 8, 9 ou 10, dans lequel lesdits moyens (54) pour mémoriser ladite partie de longueur d'exécution et lesdits signaux de composantes de couleur numériques associés dans lesdits moyens formant mémoire (58, 60) comprennent des moyens (54) pour mémoriser en alternance un premier jeu desdites parties de longueur d'exécution et desdits signaux de composantes de couleur numérique associés dans une première mémoire tampon (58) et pour mémoriser en séquence un deuxième jeu desdites parties de longueur d'exécution et desdits signaux de composantes de couleur numériques associés dans une deuxième mémoire tampon (60), et pour répéter lesdites étapes de mémorisation dans lesdites première et deuxième mémoires tampons (58, 60) pour des jeux ultérieurs de parties de longueur d'exécution et desdits signaux de composantes de couleur numériques associés.

12. Système selon la revendication 11, comprenant de plus des moyens pour présenter en séquence lesdits jeux à un générateur de pixels (61) depuis ladite première mémoire tampon (58) et ladite deuxième mémoire tampon (60) après que la mémorisation de chacun desdits jeux dans chacune desdites mémoires tampons (58, 60) ait été achevée.

13. Système selon l'une quelconque des revendications 8 à 12, dans lequel ladite partie de longueur d'exécution de chacun desdits signaux numérisés est une concaténation de parties de longueur d'exécution non concaténées d'une septième taille de mot numérique inférieure à ladite deuxième taille de mot numérique, le système comprenant de plus des moyens (50) pour diviser chacun desdits signaux numérisés qui comprend une partie de longueur d'exécution concaténée en une pluralité de signaux numérisés qui comprennent chacun une partie de longueur d'exécution non concaténée.

14. Système selon l'une quelconque des revendications 8 à 13, comprenant de plus des moyens (45) pour recevoir des codes de saut représentant des parties de longueur d'exécution et lesdits signaux de composantes de couleur numériques associés dans les lignes de balayage qu'il faut sauter dans la mémorisation desdites parties de longueur d'exécution et lesdits signaux de composantes de couleur numériques associés desdites lignes de balayage de ladite trame d'image dans lesdits moyens formant mémoire (58, 60), grâce à quoi seules lesdites parties de longueur d'exécution et lesdits signaux de composantes numériques de couleur associés qui ont changé dans ladite trame d'image par rapport aux données vidéo précédentes sont mémorisés dans lesdits moyens formant mémoire (58, 60).

FIG.1

FIG. 2

FIG. 3

EP 0 339 947 B1

FIG. 4

X MARKS DECISION POINTS

RED GREEN & BLUE
COLORS AT APEX

RUN LENGTH

FIG. 5

FIG. 6

18

FIG. 7